# FASCICULE DE BREVET EUROPEEN

(11) **EP 1 178 726 B1**
(45) Date de publication et mention de la délivrance du brevet: **05.03.2003**
(21) Numéro de dépôt: 00927362.4
(22) Date de dépôt: 18.05.2000
(51) Int. Cl.: A01N 1/02

(54) **SOLUTION AQUEUSE DE CONSERVATION DE TISSUS ET D'ORGANES**
WÄSSRIGE LÖSUNG ZUM KONSERVIEREN VON GEWEBE UND ORGANEN
AQUEOUS SOLUTION FOR PRESERVING TISSUES AND ORGANS

(30) Priorité: 18.05.1999 FR 9906434
(43) Date de publication de la demande: 13.02.2002
(73) Titulaire: CAIR L.G.L., 69380 Civrieux d'Azergues (FR)
(72) Inventeur: LOPEZ, Georges, Antoine, F-69290 Craponne (FR); RAMELLA VIRIEUX, Silvina, F-69001 Lyon (FR)
(74) Mandataire: Vuillermoz, Bruno
(86) Numéro de dépôt international: FR0001336
(87) Numéro de publication internationale: WO00069259

(56) Documents cités:
- WO-A-90/13307
- WO-A-95/02326
- WO-A-97/22244
- WO-A-98/35551
- WO-A-99/08514
- FR-A- 2 723 818
- DATABASE CHEMABS [en ligne] CHEMICAL ABSTRACTS SERVICE, COLUMBUS, OHIO, US; D.C.MARSH ET AL.: "Hypothermic preservation of hepatocytes. II. Importance of calcium and amino acids" retrieved from STN-INTERNATIONAL, accession no. 112:136600 XP002130968 & CRYOBIOLOGY, vol. 27, no. 1, 1990, pages 1-8,
- W.N.NICOMB ET AL.: "OPTIMAL CARDIOPLEGIA AND 24-HOUR HEART STORAGE WITH SIMPLIFIED UW SOLUTION CONTAINING POLYETHYLENE GLYCOL" TRANSPLANTATION, vol. 49, no. 2, février 1990 (1990-02), pages 261-263, XP002130967

## Description

L'invention se rapporte à une solution aqueuse de conservation de tissus et d'organes. Par « tissus », on désigne notamment mais de façon non limitative les veines, artères, valves, vaisseaux.... Par "solution de conservation d'organes", on désigne une solution aqueuse de conservation unique apte à conserver une multitude d'organes, et notamment, mais de façon non limitative, le foie, le coeur et le rein.

Après avoir été prélevés chez le donneur, le ou les organes ou les tissus, sont soumis avant d'être greffés chez un receveur, à une période inévitable d'ischémie. Par conséquent, les liquides mis en oeuvre pour la conservation d'organes doivent remplir simultanément trois objectifs, à savoir :
- laver le greffon du sang résiduel,
- refroidir l'organe,
- assurer une prévention et une protection efficace contre les lésions provoquées par l'ischémie.

La méthode de conservation d'organes la plus répandue est la conservation hypothermique statique. Cette méthode consiste à rincer l'organe prélevé avec une solution de conservation refroidie, puis à maintenir l'organe dans cette solution jusqu'au moment de la greffe ultérieure. Cependant, cette méthode assure la conservation des organes pour seulement une période limitée, cette période ne dépassant guère 24 heures pour le rein, 12 à 18 heures pour le foie et 4 à 6 heures pour le coeur.

Les liquides de conservation d'organes proposés jusqu'alors présentent des compositions différentes en fonction des organes à conserver.

Ainsi, sont préconisés pour la conservation du rein, le liquide EURO COLLINS commercialisé par FRESENIUS, résultant d'un mélange du type intracellulaire (concentration en potassium supérieure à la concentration en sodium) exclusivement ionique c'est-à-dire exempt de toute macromolécule et le liquide BELZER-VIASPAN connu également sous le nom de UW (Université du Wisconsin) commercialisé par DUPONT.

Concernant la conservation hépatique, celle-ci peut être assurée au moyen de la solution BELZER-VIASPAN précitée.

Enfin, on a proposé pour la conservation de greffons cardiaques, le liquide SAINT THOMAS résultant d'un mélange purement ionique du type extracellulaire (concentration en sodium supérieure à la concentration en potassium) exempt de macromolécule, commercialisé par les Laboratoires AGUETTANT.

Les compositions de chacun de ces liquides figurent dans le tableau 1 ci-après.

**Tableau 1**

| | **SAINT-THOMAS** | **EURO COLLINS** | **BELZER** |
|---|---|---|---|
| Sodium (mM) | 120 | | 30 |
| Potassium (mM) | 16 | | 125 |
| Kaffinose (mM) | | | 30 |
| Lactobionate (mM) | | | 100 |
| Glutathion (mM) | | | 3 |
| Adénosine (mM) | | | 5 |
| Allopurinol (mg/l) | | | 1 |
| HEA(g/l) Hydroxyéthyl amidon PM : 250 000 | | | 50 |
| MgSO₄ (mM) | | | 5 |
| H₂PO₄ (mM) | | | 25 |
| KH₂PO₄(g/l) | | 2,0 | |
| Glucose (g/l) | | 25 | |
| HCO₃ (mM) | 10 | | |
| Cl (mM) | 160 | | |
| Mg (mM) | 16 | | |
| CaCl₂ (mM) | 1,2 | | |
| K₂HPO₄ 3H₂O (g/l) | | 9,70 | |
| KCl (g/l) | | 1,12 | |
| MgSO₄ 7H₂O (g/l) | | 7,38 | |
| NaHCO₃ (g/l) | | 0,86 | |
| Osmolarité (mOsm/Kg) | 290 | 320 | 300 |

Comme déjà dit et comme le montre le tableau récapitulatif ci-dessus, la solution retenue pour la conservation cardiaque est du type extracellulaire (riche en sodium), alors que la solution de conservation pour la conservation du rein et du foie est du type intracellulaire (riche en potassium).

Comme déjà dit, le principal inconvénient de ces solutions est de ne pouvoir être aptes à assurer la conservation de tous les organes.

D1 décrit une composition de perfusion extra ou intra cellulaire comprenant un mélange de PEG de poids moléculaire égal à 20000 et de BDM (2,3-butadione 2-monoxyme).

Le document WO 98/35551 décrit une composition extra ou intra cellulaire pour la conservation d'organes dénuée d'ions calcium et comprenant un polyéthylène glycol purifié de poids moléculaire compris entre 20 000 et 35 000.

Le document WO-A-97/22244 décrit une solution associant calcium et nitroglycérine exempte de polyéthylène glycol.

Le document WO-A-90/13307 décrit une solution de conservation intracellulaire comprenant du polyéthylène glycol dont le poids moléculaire n'excède pas 20 000.

Le document WO 99/08514 décrit une solution constituée d'une molécule ramifiée comportant des unités PEG.

Le document C.A. Official Number 112:136600 et CRYOBIOLOGIE, Volume 27, No. 1-1990, pages 1-8, concerne une étude comparée de deux solutions mises en oeuvre pour la conservation de foie de rats.

La première solution est la solution dénommée "Leibovitz-15", dont la composition n'est pas décrite et à laquelle est ajoutée une certaine proportion de PEG sans que soit indiqué son poids moléculaire. La deuxième solution est dénommée "PE", pour Principal Electrolyte, à laquelle on ajoute avantageusement un mélange de calcium et d'acides aminés. En résumé, cette étude montre que l'ajout de calcium et d'acides aminés à la solution PE permet d'obtenir des résultats identiques à ceux de la solution Leibovitz-15 sur la conservation du foie.

Le document TRANSPLANTATION, Volume 49, No. 2, Février 1990, pages 261-263, décrit une solution de conservation du type intracellulaire dans laquelle la concentration en potassium est supérieure à la concentration en sodium.

En d'autres termes, le problème que se propose de résoudre l'invention est de fournir une solution unique susceptible d'assurer la conservation de tout organe, et notamment du foie, rein et coeur.

Un autre objectif de l'invention est de préparer une solution qui soit apte non seulement à conserver les organes, mais également à conserver les tissus.

Un autre objectif de l'invention est d'augmenter la durée et la qualité de la conservation.

Pour résoudre ces problèmes, l'invention propose une solution aqueuse de conservation de tissus et d'organes.

Cette solution se caractérise en ce qu'elle est du type extracellulaire et en ce qu'elle comprend des ions calcium (Ca²⁺) et du polyéthylène glycol purifié de poids moléculaire égal à 35 000.

Dans la suite de la description et dans les revendications, par solution du type extracellulaire, on désigne une solution comprenant une concentration en sodium (Na⁺) d'au moins 30 millimoles, avantageusement 125 millimoles.

Pour une concentration inférieure à 30 millimoles, on obtient une solution cardioplégique.

Le Demandeur a constaté que de façon surprenante, la solution de type extracellulaire de l'invention permettait d'assurer non seulement la conservation du coeur et des tissus, mais également la conservation d'organes tels que le rein et le foie, pour lesquels étaient proposées jusqu'alors des solutions du type intracellulaires.

En outre et de façon tout aussi surprenante, le Demandeur a constaté que la présence de calcium au sein de la composition extracellulaire permettait de conserver non seulement le coeur, mais également les autres organes du type foie et rein, pour lesquels le calcium était jusque là absent.

Enfin, alors que toutes les solutions comprenant des macromolécules, dont le poids moléculaire est de 20 000, le Demandeur a découvert que l'utilisation de macromolécule du type polyéthylène glycol de poids moléculaire égal à 35 000 permettait d'améliorer la conservation des organes.

Dans une forme de réalisation avantageuse, le PEG est un PEG purifié non linaire, c'est-à-dire un PEG synthétisé à partir de molécules de PEG de poids moléculaire inférieur.

En pratique, la purification est effectuée par dialyse en ayant pour objectif de supprimer toutes les molécules issues de l'oxydation du PEG ou nécessaires à sa fabrication en particulier les molécules de poids moléculaire inférieur à 15 000.

Pour assurer le redémarrage cardiaque dans le cas de la conservation du coeur, la concentration en ions Ca²⁺ est comprise entre 0,1 et 2 millimoles, avantageusement 0,5 millimoles.

Pour une concentration inférieure à 0,1 millimoles, on n'observe pas de redémarrage cardiaque.

Pour une concentration supérieure à 2 millimoles, on perturbe le fonctionnement cardiaque.

Comme déjà dit, pour éviter la formation d'oedèmes tissulaires et cellulaires, la macromolécule présente un poids moléculaire égal à 35 000 permettant de garantir la pression oncotique, améliorant ainsi l'efficacité de la conservation.

Dans le cas de la conservation rénale, il apparaît en outre que ladite macromolécule améliore les fonctions glomérulaire et tubulaire et produit un effet diurétique.

En pratique, la concentration en polyéthylène glycol de la solution de l'invention est comprise entre 0,01 et 5 millimoles, de préférence inférieure à 1 millimole, avantageusement égale à 0,03 millimole.

Pour une concentration inférieure à 0,01 millimole, on observe la formation d'oedèmes tissulaires et cellulaires.

Pour une concentration supérieure à 5 millimoles, la viscosité de la solution n'est pas satisfaisante.

Selon une autre caractéristique de l'invention, la solution aqueuse de conservation de l'invention comprend en outre un anion imperméant, un sucre, un agent stabilisant de membrane, une solution tampon, un agent antiradicalaire et une source d'énergie.

Par ailleurs, pour obtenir une solution du type extracellulaire, le pH de la solution de l'invention est compris entre 6,5 et 8, avantageusement 7,4.

Dans une forme de réalisation avantageuse, la solution aqueuse de conservation comprend en outre:
- de 20 à 40 millimoles de raffinose,
- de 70 à 140 millimoles d'acide lactobionique,
- de 1 à 10 millimoles de MgSO₄,
- de 10 à 40 millimoles de H₂PO₄ (apportée par KH₂PO₄),
- de 1 à 6 millimoles de Glutathion,
- de 1 à 10 millimoles d'Adénosine,
- de 1,5 à 5 millimoles d'Allopurinol,
- de 10 à 40 millimoles de K⁺ apportées par KH₂PO₄,
- de 30 à 150 millimoles de Na⁺ apportées par NaOH,
- avec pH = 6,5 à 8
- et osmolarité de 290 à 320 millimoles/kg

Dans une forme avantageuse, la solution aqueuse de conservation de l'invention comprend :
- Raffinose 30 millimoles
- PEG 35000 purifié 0,03 millimoles
- MgSO₄ 5 millimoles
- KH₂FO₄ 25 millimoles
- CaCl₂ 0,5 millimoles
- Gluthation 3 millimoles
- Adénosine 5 millimoles
- Allopurinol 1 millimole
- Na⁺ (apporté par NaOH) 125 millimoles
- K⁺ (apporté par KH₂PO₄) 25 millimoles
- pH=7,4
- osmolarité 300 millimoles/kg

La solution de conservation de l'invention s'applique à la conservation hypothermique statique et est utilisée à une température comprise entre 2 et 10° C, avantageusement 4° C.

L'invention et les avantages qui en découlent ressortiront mieux des exemples de réalisation ci-après.

### Exemple 1

### Préparation de la solution aqueuse de conservation multi-organes de l'invention

On prépare une solution aqueuse de conservation dont la composition est reproduite dans le tableau 2 suivant :

**Tableau 2**

| | **Concentration (mM)** |
|---|---|
| Raffinose | 30 |
| Lactobionate | 100 |
| Glutathion réduit | 3 |
| Adénosine | 5 |
| Allopurinol | 1 |
| PEG (35000) fabriqué par MERCK | 0,029 |
| MgSO₄.7H₂O | 5 |
| H₂PO₄ (apporté par KH₂PO₄) | 25 |
| CaCl₂.2H₂O | 0,5 |
| Na⁺ (apporté par NaOH) | 125 |
| K⁺ (apporté par KH₂PO₄) | 25 |

La préparation de la solution consiste à dissoudre l'ensemble des constituants dans une solution aqueuse, le pH de la solution obtenue étant ramené à 7,4 par addition du NaOH.

### Exemple 2

On a comparé dans cet exemple les performances de la solution aqueuse de conservation de l'invention sur le rein et le foie au regard de la solution BELZER-VIASPAN commercialisée par DUPONT.

Pour ce faire, les essais sont réalisés sur des organes isolés et perfusés selon des techniques connues. Pour l'essentiel, ces techniques consistent en l'isolement total ex-vivo de l'organe et en sa perfusion avec une solution artificielle du type KREPS Henseleit-bicarbonate enriche en substrat énergétique et contenant de l'albumine.

On distingue dans cet exemple trois groupes différents :
- **Groupe A** : groupe contrôle directement perfusé avec la solution artificielle sans conservation préalable ;
- **Groupe B** : organe conservé pendant une période d'ischémie de 24 heures à une température de 4° C dans une solution de conservation BELZER-VIASPAN avant re-perfusion avec la solution artificielle ;
- **Groupe C** : organe conservé pendant une période de 24 heures d'ischémie à une température de 4° C dans la solution de conservation de l'invention.

### I/ Conservation hépatique

Pour apprécier l'efficacité de la solution de conservation de l'invention sur la conservation hépatique, on a étudié les paramètres suivants :

### a) Paramètres fonctionnels

### 1 - Variation du débit biliaire

Le débit biliaire après greffe est un indice de bon fonctionnement du foie. Les débits biliaires ont été calculés après une période de conservation hypothermique de 24 heures.

Les résultats figurent dans le tableau suivant (tableau 3).

**Tableau 3**

| **Débit Biliaire (µl/min/g)** | | | |
|---|---|---|---|
| | A | B | C |
| Moyenne 30 min | 0,51 | 0,17 | 0,35 |
| Moyenne 60 mm | 0,48 | 0,35 | 0,47 |
| Moyenne 90 min | 0,45 | 0,30 | 0,44 |
| Moyenne 1200 min | 0,51 | 0,26 | 0,56 |

Pour le groupe A, le débit biliaire est stable pendant les deux heures de perfusion. Comme le montre le tableau, le débit biliaire est minimal pendant les 30 premières minutes de perfusion, puis augmente jusqu'à atteindre un maximum au bout de 60 minutes pour rester stable durant la deuxième heure de perfusion.

On constate que le foie conservé dans la solution de l'invention (C) présente le débit biliaire le plus élevé (0,56).

### 2 - Excrétion du vert d'indocyanine dans la bile

Le vert d'indocyanine en se fixant rapidement sur les protéines plasmatiques se distribue dans le volume vasculaire. Il est spécifiquement épuré par le foie et concentré dans la bile. La présence du vert d'indocyanine dans le foie dépend du débit de perfusion et son excrétion dépend du statut énergétique des hépatocytes. Il s'ensuit que ce paramètre donne non seulement des informations sur l'intégrité des cellules endothéliales, mais également des informations sur l'intégrité des hépatocytes

Le pourcentage d'excrétion du vert d'indocyanine dans la bile a été représenté dans le tableau suivant (tableau 4).

**Tableau 4**

| **Excrétion du vert d'indocyanine dans la bile (%)** | | | |
|---|---|---|---|
| | A | B | C |
| Moyenne | 41 | 11 | 29 |

On constate que la clairance du vert d'indocyanine est plus faible pour la conservation du foie dans la solution B que dans la solution C de l'invention, qui apporte donc une amélioration significative.

### b) Paramètres biochimiques

### 1 - Variation d'activité des transaminases

Les transaminases (ALAT et ASAT) sont des enzymes intracellulaires. Leur présence dans le perfusat témoigne d'une lyse cellulaire.

Les résultats sont représentés dans le tableau ci-après (tableau 5).

**Tableau 5**

| **ALAT (UI/L)** | | | |
|---|---|---|---|
| | A | B | C |
| Moyenne 30 mm | 4 | 13 | 9 |
| Moyenne 60 min | 5 | 18 | 14 |
| Moyenne 90 min | 9 | 25 | 16 |
| Moyenne 1200 mm | 13 | 31 | 18 |

| **ASAI (UI/L)** | | | |
|---|---|---|---|
| Moyenne 30 min | 34 | 61 | 44 |
| Moyenne 60 min | 43 | 71 | 59 |
| Moyenne 90 mm | 50 | 86 | 67 |
| Moyenne 1200 mm | 70 | 107 | 73 |

On constate que le foies perfusés avec la solution B de type intracellulaire libèrent plus d'ASAT et d'ALAT que les foies conservés dans la solution de l'invention de type extracellulaire (C). De plus, le remplacement de l'hydroxyéthylamidon de la solution B par le polyéthylène glycol entraîne une importante diminution de la lyse cellulaire.

Enfin, on constate qu'il n'y a aucune différence de lyse cellulaire entre le foie perfusé par le liquide de conservation A par rapport au foie perfusé par le liquide ce conservation C.

### 2 - Variation d'activité des créatine kinases

La créatine kinase (CK-BB) est une isoenzyme qui se trouve spécifiquement dans les cellules endothéliales. Sa libération dans le liquide de perfusion montre donc une lyse de ces cellules. Au cours de la conservation en ischémie froide, les cellules endothéliales subissent des lésions sévères. La perte de viabilité des cellules endothéliales n'a lieu qu'après perfusion et le taux de mort cellulaire dépend de la qualité de la conservation et donc, de la solution de conservation.

Le temps 0 référencé dans le tableau ci-après (tableau 6) correspond à la remise en perfusion des greffons. Dans ces conditions, le liquide récupéré est le liquide de conservation gardé 24 heures dans le foie. L'activité CK-BB dosée est donc un marqueur de la lésion des cellules endothéliales subie pendant la période de conservation.

On remarque que la solution C protège bien les cellules endothéliales.

**Tableau 6**

| **CK (UI/L)** | | | |
|---|---|---|---|
| | A | B | C |
| Moyenne T0-CK BB | 32 | 81 | 33 |
| Moyenne T30-CK BB | 7 | 40 | 34 |
| Moyenne (CK UI/L/g) CK BB | 0,004 | 0,022 | 0,022 |

### II - Conservation du rein

On a comparé l'efficacité du liquide de conservation de l'invention (solution C) par rapport au liquide BELZER-VIASPAN (solution B) et EURO COLLINS (solution D).

Pour ce faire, on a étudié les paramètres suivants.

### a) Variation du débit urinaire

Le débit urinaire après greffe témoigne du mauvais ou bon fonctionnement rénal. Les résultats sont représentés dans le tableau ci-après (tableau 7).

**Tableau 7**

| **Débit Urinaire (µl/min/g)N** | | | | |
|---|---|---|---|---|
| | A | B | C | D |
| Moyenne ± et | 55.43 ± 24.04 | 36.03 ± 15.09 | 118.25 ± 60.99 | 24.61 ± 21.04 |

Comme le montre le tableau, le débit urinaire des reins perfusés par le liquide A reste inférieur au débit urinaire des reins sans conservation préalable.

En revanche, les reins conservés dans la solution de l'invention présentent le débit le plus important.

### b) Clairance de l'inuline

Ce paramètre permet de mesurer la fonction glomérulaire du rein et donne des informations sur le débit de filtration glomérulaire.

Les résultats sont représentés dans le tableau 8.

**Tableau 8**

| **Clairance de l'inuline (µl/min/g)** | | | | |
|---|---|---|---|---|
| | A | B | C | D |
| Moyenne ± et | 512.43 ± 109.8 | 49.42 ± 29.21 | 306.90 ± 131.33 | 25.06 ± 24.71 |

Comme le montre ce tableau, la clairance de l'inuline est plus faible avec la conservation du greffon dans la solution B. En revanche, la solution C de l'invention présente une amélioration significative.

### c) Réabsorption de sodium

Le taux de réabsorption de sodium permet de mesurer la fonction tubulaire rénale. Les résultats sont représentés dans le tableau 9 ci-après.

**Tableau 9**

| **Taux de réabsorption de sodium (%)** | | | | |
|---|---|---|---|---|
| | A | B | C | D |
| Moyenne ± et | 92.2 ± 3.51 | 26.68 ± 12.98 | 61.17 ± 15.18 | 3.3 ± 4.47 |

Comme le montre ce tableau, la réabsorption de sodium est plus faible pour les reins conservés avec la solution B que pour les reins conservés avec la solution C.

Les avantages de l'invention ressortent bien de la description.

On notera notamment la capacité du liquide de conservation de l'invention à conserver tout organe, que ce soit foie, coeur, rein ou autre.

On note en outre l'amélioration des performances du liquide de l'invention sur les paramètres biochimiques et fonctionnels des organes perfusés par rapport aux liquides de conservation actuellement commercialisés.

## Revendications

1. Solution aqueuse de conservation de tissus et d'organes, **caractérisée en ce qu'**elle est du type extracellulaire et **en ce qu'**elle comprend des ions calcium (Ca²⁺) et du polyéthylène glycol purifié de poids moléculaire égal à 35 000.

2. Solution aqueuse selon la revendication 1, **caractérisée en ce que** le PEG est synthétisé à partir de molécules de PEG de poids moléculaire inférieur.

3. Solution aqueuse selon l'une des revendications précédentes, **caractérisée en ce qu'**elle comprend des ions Na⁺ à une concentration d'au moins 30 millimoles, avantageusement 125 millimoles.

4. Solution aqueuse selon l'une des revendications précédentes, **caractérisée en ce que** la concentration en ion Ca²⁺ est comprise entre 0,01 et 2 millimoles, avantageusement 0,5 millimole.

5. Solution aqueuse de conservation selon l'une des revendications précédentes, **caractérisée en ce que** la concentration de PEG dans la solution est comprise entre 0,01 et 5 millimoles, de préférence inférieure à 1 millimole, avantageusement égale à 0,03 millimole.

6. Solution aqueuse de conservation selon l'une des revendications précédentes, **caractérisée en ce qu'**elle comprend en outre un anion imperméant, un sucre, un agent stabilisant de membrane, une solution tampon, un agent antiradicalaire et une source d'énergie.

7. Solution aqueuse de conservation selon l'une des revendications précédentes, **caractérisée en ce qu'**elle comprend en outre :
- de 20 à 40 millimoles de raffinose,
- de 70 à 140 millimoles d'acide lactobionique,
- de 1 à 10 millimoles de MgSO₄,
- de 10 à 40 millimoles de H₂PO₄ apporté par KH₂PO₄,
- de 1 à 6 millimoles de Glutathion,
- de 1 à 10 millimoles d'Adénosine,
- de 1,5 à 5 millimoles d'Allopurinol,
- de 10 à 40 millimoles de K⁺ apportées par KH₂PO₄,
- de 30 à 150 millimoles de Na⁺ apportées par NaOH,
- avec pH = 6,5 à 8
- et osmolarité de 290 à 320 millimoles/kg

8. Solution aqueuse de conservation selon l'une des revendications précédentes, **caractérisée en ce qu'**elle comprend :
• Raffinose 30 millimoles
• PEG 35000 purifié 0,03 millimoles
• MgSO₄ 5 millimoles
• H₂PO₄ 25 millimoles
• CaCl₂ 0,5 millimoles
• Gluthation 3 millimoles
• Adénosine 5 millimoles
• Allopurinol 1 millimole
• Na⁺ (apporté par NaOH) 125 millimoles
• K⁺ (apporté par KH₂PO₄) 25 millimoles
• pH = 7,4
• osmolarité 300 millimoles/kg

## Claims

1. An aqueous solution for preserving tissues and organs, **characterized in that** it is of the extra-cellular type and **in that** it comprises calcium (Ca²⁺) ions and purified polyethylene glycol having a molecular weight equal to 35 000.

2. The aqueous solution as claimed in claim 1, **characterized in that** the PEG is synthesized from PEG molecules of low molecular weight.

3. The aqueous solution as claimed in one of the preceding claims, **characterized in that** it comprises Na⁺ ions at a concentration of at least 30 millimoles, advantageously 125 millimoles.

4. The aqueous solution as claimed in one of the preceding claims, **characterized in that** the concentration of Ca²⁺ ion is between 0.01 and 2 millimoles, advantageously 0.5 millimole.

5. The aqueous preservation solution as claimed in one of the preceding claims, **characterized in that** the concentration of PEG in the solution is between 0.01 and 5 millimoles, preferably of less than 1 millimole, advantageously equal to 0.03 millimole.

6. The aqueous preservation solution as claimed in one of the preceding claims, **characterized in that** it comprises, in addition, an impermeant anion, a sugar, a membrane-stabilizing agent, a buffer solution, an anti-free radical agent and an energy source.

7. The aqueous preservation solution as claimed in one of the preceding claims, **characterized in that** it comprises, in addition :
- from 20 to 40 millimoles of raffinose,
- from 70 to 140 millimoles of lactobionic acid,
- from 1 to 10 millimoles of MgSO₄,
- from 10 to 40 millimoles of H₂PO₄ (provided by KH₂PO₄),
- from 1 to 6 millimoles of glutathione,
- from 1 to 10 millimoles of adenosine,
- from 1.5 to 5 millimoles of allopurinol,
- from 10 to 40 millimoles of K⁺ provided by KH₂PO₄,
- from 30 to 150 millimoles of Na⁺ provided by NaOH,
- with pH = 6.5 to 8
- and osmolarity of 290 to 320 millimoles/kg

8. The aqueous preservation solution as claimed in one of the preceding claims, **characterized in that** it comprises :
• Raffinose 30 millimoles
• Purified PEG 35 000 0.03 millimole
• MgSO₄ 5 millimoles
• H₂PO₄ 25 millimoles
• CaCl₂ 0.5 millimole
• Gluthatione 3 millimoles
• Adenosine 5 millimoles
• Allopurinol 1 millimole
• Na_{⊕} (provided by NaOH) 125 millimoles
• K⁺ (provided by KH₂PO₄) 25 millimoles
• pH = 7.4
• osmolarity 300 millimoles/kg

## Patentansprüche

1. Wässerige Lösung zur Konservierung von Geweben und Organen, **dadurch gekennzeichnet, dass** sie vom extrazellulären Typ ist und dass sie Kalziumionen (Ca²⁺) und gereinigtes Polyethylenglykol mit einem Molekulargewicht gleich 35 000 enthält.

2. Wässerige Lösung nach Anspruch 1, **dadurch gekennzeichnet, dass** das PEG aus PEG-Molekülen mit geringerem Molekulargewicht synthetisiert wird.

3. Wässerige Lösung nach einem der vorangehenden Ansprüche, **dadurch gekennzeichnet, dass** sie Na⁺-Ionen in einer Konzentration von wenigstens 30 Millimol, vorteilhafterweise 125 Millimol enthält.

4. Wässerige Lösung nach einem der vorangehenden Ansprüche, **dadurch gekennzeichnet, dass** die Konzentration an Ca²⁺-Ionen 0,01 bis 2 Millimol, vorteilhafterweise 0,5 Millimol beträgt.

5. Wässerige Konservierungslösung nach einem der vorangehenden Ansprüche, **dadurch gekennzeichnet, dass** die PEG-Konzentration in der Lösung zwischen 0,01 und 5 Millimol liegt, vorzugsweise geringer ist als 1 Millimol, vorteilhafterweise 0,03 Millimol beträgt.

6. Wässerige Konservierungslösung nach einem der vorangehenden Ansprüche, **dadurch gekennzeichnet, dass** sie außerdem ein impermeantes Anion, einen Zucker, ein membranstabilisierendes Agens, eine Pufferlösung, ein antiradikales Agens und eine Energiequelle enthält.

7. Wässerige Konservierungslösung nach einem der vorangehenden Ansprüche, **dadurch gekennzeichnet, dass** sie außerdem enthält:
- 20 bis 40 Millimol Raffinose,
- 70 bis 140 Millimol Lactobionsäure,
- 1 bis 10 Millimol MgSO₄,
- 10 bis 40 Millimol H₂PO₄ zugeführt durch KH₂PO₄,
- 1 bis 6 Millimol Glutathion,
- 1 bis 10 Millimol Adenosin,
- 1,5 bis 5 Millimol Allopurinol,
- 10 bis 40 Millimol K⁺ zugeführt durch KH₂PO₄,
- 30 bis 150 Millimol Na⁺ zugeführt durch NaOH,
- mit pH = 6,5 bis 8
- und einer Osmolarität von 290 bis 320 Millimol/kg

8. Wässerige Konservierungslösung nach einem der vorangehenden Ansprüche, **dadurch gekennzeichnet, dass** sie enthält:
• Raffinose 30 Millimol
• gereinigtes PEG 35000 0,03 Millimol
• MgSO₄ 5 Millimol
• H₂PO₄ 25 Millimol
• CaCl₂ 0,5 Millimol
• Glutathion 3 Millimol
• Adenosin 5 Millimol
• Allopurinol 1 Millimol
• Na⁺ (zugeführt durch NaOH) 125 Millimol
• K⁺ (zugeführt durch KH₂PO₄) 25 Millimol
• pH = 7,4
• Osmolarität 300 Millimol/kg
